# EUROPÄISCHE PATENTANMELDUNG

(11) **EP 1 974 638 A1**
(43) Veröffentlichungstag der Anmeldung: **01.10.2008**
(21) Anmeldenummer: 07006600.6
(22) Anmeldetag: 29.03.2007
(51) Int. Cl.: A47J 31/06, A47J 31/40

(54) **System mit einer Getränkemaschine und mit Portionskapseln**

(71) Anmelder: Tchibo GmbH, 22297 Hamburg (DE)
(72) Erfinder: Ternité, Rüdiger, 21149 Hamburg (DE); Balkau, Werner, 8762 Schwändi (CH); Meyer-Ruhstrat, Hartwig, 21435 Stelle (DE); Lantz, Ingo, 22149 Hamburg (DE)
(74) Vertreter: UEXKÜLL & STOLBERG

(57) **Zusammenfassung**

Bei einem System mit einer Getränkemaschine und mit Portionskapseln (1) von mindestens zwei unterschiedlichen Typen, die jeweils eine Getränkesubstanz enthalten, sind Portionskapseln (1) unterschiedlichen Typs mit voneinander verschiedenen Farbcodierungen versehen. Die Getränkemaschine ist zum Zubereiten von Getränken, insbesondere zum Brühen heißer Kaffeegetränke, mittels der Portionskapseln (1) eingerichtet und weist eine Druckwassereinrichtung, einen zur Aufnahme einer Portionskapsel (1) vorgesehene Kapselhalter und eine Steuerung auf. Ferner enthält die Getränkemaschine eine Farberkennungseinrichtung (20), die dazu eingerichtet ist, die Farbcodierung einer in den Kapselhalter einzusetzenden oder eingesetzten Portionskapsel (1) zu erfassen und in der Steuerung ein dieser Farbcodierung zugeordnetes Programm zum Betrieb der Getränkemaschine auszuwählen.

## Beschreibung

Die Erfindung betrifft ein System mit einer Getränkemaschine und mit Portionskapseln von mindestens zwei unterschiedlichen Typen, eine Getränkemaschine, die zum Zubereiten von Getränken, insbesondere zum Brühen heißer Kaffeegetränke, eingerichtet ist, sowie ein Verfahren zum Zubereiten eines Getränks.

Aus der DE 10 2004 056 224 A1 ist ein System mit einer Kaffeemaschine und einer Portionskapsel bekannt, mit welchem Getränke aus extrahierbaren Stoffen, wie z.B. Kaffee, hergestellt werden können. Diese Kaffeemaschine weist eine Druckwassereinrichtung, einen Portionskapselhalter und eine Steuerung auf. Beim oder nach dem Einsetzen einer Portionskapsel in den Portionskapselhalter werden der Deckel und der Boden der Portionskapsel von zwei relativ zueinander bewegbaren Aufstechmitteln durchstochen, so dass heißes Wasser durch den Kapseldeckel in den Innenraum der Portionskapsel und Getränk durch den Kapselboden aus der Portionskapsel gelangen kann. Bei dem vorbekannten System ist die Steuerung zum Bereitstellen mindestens drei verschiedener Drücke für das Druckwasser eingerichtet, z.B. zum Brühen von Espresso (z.B. 13 bar bis 18 bar oder 8 bar bis 18 bar), von Caffé Crema (z.B. 9 bar bis 13 bar oder 4 bar bis 10 bar) und von Filterkaffee (z.B. 3 bar bis 9 bar oder 1 bar bis 4 bar). Die für die verschiedenen Druckstufen vorgesehenen Portionskapseln sind hierbei unterschiedlich ausgeführt. So hat beispielsweise die Portionskapsel für die geringste Druckstufe eine Sollschwachstelle im Boden, während die Portionskapseln für hohe Drücke einen ungeschwächten Boden aufweisen. Die über die Steuerung der Kaffeemaschine vorgegebenen Brühdrücke sind auf den Inhalt der jeweiligen Portionskapsel abgestimmt und an das damit zu brühende Kaffeegetränk angepasst.

Das System gemäß DE 10 2004 056 224 A1 wird mit Portionskapseln vermarktet, die eine einfache Zuordnung der jeweiligen Kapselausführung zu der zum Brühen vorgesehenen Druckstufe der Kaffeemaschine zulassen. Dazu sind die Portionskapseln am Kapselboden und an der Kapselwandung eingefärbt, z.B. blau für die niedrigste Druckstufe (Filterkaffee) und schwarz für die höchste Druckstufe (Espresso). Die Brühtasten der Kaffeemaschine sind entsprechend mit derselben Farbe gekennzeichnet, wobei jeder Brühtaste eindeutig eine Druckstufe der Steuerung der Kaffeemaschine zugeordnet ist. Damit ist für den Benutzer eindeutig erkennbar, welche Kapsel mit welchem Druck gebrüht werden soll und welche Funktionstaste der Kaffeemaschine dafür zu betätigen ist.

Ein Nachteil dieser Ausführungsform ist jedoch, dass die jeweilige Druckstufe vom Benutzer explizit angewählt werden muss. Daher besteht die Gefahr von Verwechslungen, z.B. indem der Benutzer bei einer eingelegten Portionskapsel für niedrigen Druck die hohe Druckstufe der Kaffeemaschine auswählt.

Die WO 2005/079638 A1 beschreibt eine Portionskapsel, deren Deckel mit einem RFID ("Radio Frequency IDentification"-Chip) oder einem Barcode versehen ist. Wenn die Portionskapsel in eine mit einer geeigneten RFID- oder Barcode-Leseeinrichtung ausgerüsteten Brühmaschine eingelegt wird, kann die in dem RFID oder Barcode enthaltene Information zur Steuerung der Brühmaschine verwendet werden. Hierbei ist neben dem relativ hohen Aufwand für RFID- oder Barcode-Leseeinrichtungen nachteilig, dass bei in Brüh- oder Getränkemaschinen vorherrschenden Bedingungen, z.B. im Hinblick auf Verschmutzungen, keine sichere Funktion gewährleistet ist.

Es ist Aufgabe der Erfindung, ein System mit einer Getränkemaschine und mit Portionskapseln von mindestens zwei unterschiedlichen Typen bereitzustellen, bei dem die verwendete Portionskapsel automatisch erkannt wird und das einfach aufgebaut ist und sicher funktioniert.

Diese Aufgabe wird gelöst durch ein System gemäß Anspruch 1 sowie eine entsprechende Getränkemaschine gemäß Anspruch 16. Der Anspruch 18 definiert ein Verfahren zum Zubereiten eines Getränks. Vorteilhafte Ausgestaltungen der Erfindung ergeben sich aus den Unteransprüchen.

Das erfindungsgemäße System weist eine Getränkemaschine sowie Portionskapseln von mindestens zwei unterschiedlichen Typen auf, die jeweils eine Getränkesubstanz enthalten. Die Getränkemaschine ist zum Zubereiten von Getränken, insbesondere zum Brühen heißer Kaffeegetränke, mittels Portionskapseln eingerichtet und weist eine Druckwassereinrichtung, einen zur Aufnahme einer Portionskapsel eingerichteten Kapselhalter (z.B. eine Brühkammer) und eine Steuerung auf. Portionskapseln unterschiedlichen Typs sind mit voneinander verschiedenen Farbcodierungen versehen. Die Getränkemaschine ist mit einer Farberkennungseinrichtung ausgerüstet, die dazu eingerichtet ist, die Farbcodierung einer in den Kapselhalter einzusetzenden oder eingesetzten Portionskapsel zu erfassen und in der Steuerung ein dieser Farbcodierung zugeordnetes Programm zum Betrieb der Getränkemaschine auszuwählen.

Der Begriff "Betrieb" ist hier ganz allgemein zu verstehen. Insbesondere kann der Ablauf eines Programms zum Betrieb der Getränkemaschine auch darin bestehen, die Getränkemaschine für die Verwendung mit der soeben erfassten Portionskapsel zu blockieren oder mit dieser Portionskapsel nicht laufen zu lassen.

Unter einer Farbcodierung ist eine Kennzeichnung der jeweiligen Portionskapsel zu verstehen, die durch die Farberkennungseinrichtung der Getränkemaschine erfasst werden kann. Es kommt hierbei auf die Farbe als solche an, die z.B. in einem vorgegebenen Gebiet der Portionskapsel aufgebracht ist. In diesem Sinne fällt z.B. ein Barcode in Form farbiger Streifen nicht unter den Begriff "Farbcodierung".

Mittels preiswerter handelsüblicher Farberkennungseinrichtungen kann eine Farbe aus einer vorgegebenen Farbpalette sicher ausgewählt werden. Dies gilt insbesondere, wenn die Zahl der Färbungen oder Farbcodierungen für die unterschiedlichen Typen von Portionskapseln relativ gering ist, was in der Praxis wegen der begrenzten Zahl der Portionskapseltypen der Fall ist. Denn dann können Farbabweichungen, die tatsächlich auftreten (z.B. durch Nuancen bei der Farbcodierung eines bestimmten Typs von Portionskapsel oder durch Verschmutzungen) oder die auf Fehlern der Farberkennungseinrichtung beruhen, noch problemlos ignoriert werden.

Die Farberkennungseinrichtung kann einen Farbsensor aufweisen. Ferner kann die Farberkennungseinrichtung eine von dem Farbsensor separate Lichtquelle und/oder eine in den Farbsensor integrierte Lichtquelle aufweisen. Mittels der Lichtquelle wird die Farbcodierung beleuchtet, z.B. mit weißem Licht. Der Farbsensor erfasst das von Farbcodierung reflektierte Licht, dessen spektrale Zusammensetzung der Farbe der Farbcodierung entspricht. Der Farbsensor enthält z.B. drei separate Sensoren, die auf die drei Grundfarben abgestimmt sind, z.B. mittels eines jeweiligen vorgesetzten Farbfilters. Derartige Farbsensoren sind bekannt. Sie werden an eine Steuer- und Auswerteelektronik angeschlossen.

Wenn eine Portionskapsel in die Getränkemaschine eingesetzt wird, kann z.B. über einen Mikroschalter für eine kurze Zeit die Lichtquelle eingeschaltet werden, woraufhin der Farbsensor die Farbe der Farbcodierung der Portionskapsel erkennt und z.B. als digitales Signal an die Steuerung der Getränkemaschine weitergibt. Es ist auch denkbar, dass die Lichtquelle eingeschaltet und die Farbcodierung der Portionskapsel erfasst wird, wenn der Benutzer einen Startknopf drückt, um den Getränkezubereitungsvorgang auszulösen.

Beim Betrieb der Getränkemaschine führt die Steuerung ein der Farbcodierung der eingesetzten Portionskapsel zugeordnetes Programm aus. Beim Ablauf dieses Programms kann z.B. der Wasserdruck, die Wassertemperatur, die Wassermenge oder die Durchflussgeschwindigkeit des zum Zubereiten verwendeten Wassers gesteuert werden. Es ist auch möglich, bestimmte Größenwerte während des Zubereitens zu variieren, also nicht konstant zu halten. Durch kurzzeitige Unterbrechung eines Brühvorgangs lässt sich z.B. das Extraktionsverhalten von extrahierbaren Stoffen verbessern.

Bei einer Ausführungsform der Erfindung ist die Steuerung der Getränkemaschine dazu eingerichtet, gemäß dem mittels der Farbcodierung einer ersten Portionskapsel ausgewählten Programm einen ersten Abschnitt eines Getränkezubereitungsvorgangs durchzuführen und in Übereinstimmung mit der Farbcodierung einer danach in dem Kapselhalter aufgenommenen zweiten Portionskapsel einen zweiten Abschnitt des Zubereitungsvorgangs durchzuführen. Ein Beispiel hierfür ist das Brühen von Cappuccino mit Hilfe von zwei Portionskapseln. Hierbei wird zunächst eine Portionskapsel mit Mahlkaffee in den Kapselhalter eingesetzt. Die Farberkennungseinrichtung erfasst deren Farbcodierung und steuert die Getränkemaschine z.B. mittels einem Druck, der im mittleren Druckbereich liegt. Anschließend wird die leere Portionskapsel entnommen und durch eine Portionskapsel eines anderen Typs ersetzt, die z.B. Milchpulver enthält. Die Farberkennungseinrichtung erfasst auch deren Farbcodierung und wählt ein entsprechendes Programm der Steuerung aus, z.B. ein Programm, welches die Wassermenge an die Milchpulvermenge anpasst. Der Programmablauf in der Getränkemaschine kann in diesem Beispiel so vorgewählt sein, dass bereits nach dem Erkennen der Farbcodierung der ersten Portionskapsel (also der mit dem Mahlkaffee für Cappuccino) eine bestimmte Farbcodierung für die zweite Portionskapsel erwartet wird. Wenn die bei der zweiten Portionskapsel erfasste Farbcodierung davon abweicht, kann z.B. ein Fehlersignal ausgelöst werden.

Das erfindungsgemäße System ermöglicht es, einer vorgegebenen Farbcodierung auch komplexe Programmabläufe zuzuordnen.

Das System kann für die Zubereitung heißer Getränke oder für die Zubereitung kalter Getränke Anwendung finden. Erfindungsgemäße Systeme, die sowohl heiße als auch kalte Getränke zubereiten können, sind ebenfalls denkbar; mit einem solchen System lässt sich z.B. ein kaltes Getränk zubereiten, indem eine vorhandene Heizeinrichtung nicht aufgeheizt wird.

Bei vorteilhaften Ausgestaltungen sind Portionskapseln unterschiedlichen Typs jeweils im Lieferzustand allseitig geschlossen, und sie weisen einen Kapselkörper mit einem Kapselboden und einer seitlichen Wandung sowie einen an dem Kapselkörper befestigten Kapseldeckel auf. Dabei kann der Kapselkörper bei den Portionskapseln unterschiedlichen Typs an seinem oberen Ende einen umlaufenden, nach außen vorspringenden Flansch aufweisen, an dem der Kapseldeckel befestigt ist. Die Farbcodierungen von Portionskapseln unterschiedlichen Typs können unterschiedliche Färbungen an den jeweiligen Kapselkörpern aufweisen, was z.B. durch vollständiges Einfärben von für die Kapselkörper verwendeten Kunststoffmaterialien erreicht werden kann. Zusätzlich oder alternativ dazu können die Farbcodierungen von Portionskapseln unterschiedlichen Typs unterschiedliche Färbungen und/oder Farbcodes an den jeweiligen Kapseldeckeln aufweisen. Beispiele hierfür sind ein farbiger Punkt, eine gleichmäßige Farbschicht auf dem Kapseldeckel oder eine Grundfarbe des zusätzlich mit einer Beschriftung versehenen Kapseldeckels.

Wenn die Farbcodierung an dem Kapselkörper vorgesehen ist, sollte die Lichtquelle der Farberkennungseinrichtung den Kapselkörper bescheinen und daher z.B. seitlich des Kapselkörpers an dem Kapselhalter angeordnet sein. Entsprechendes gilt für die Position des Farbsensors. Bei Farbcodierungen an den Kapseldeckeln sollte die Lichtquelle den Kapseldeckel beleuchten und der Farbsensor so positioniert sein, dass er den Reflex von dem Kapseldeckel erfasst. Die Verwendung mehrerer Farbsensoren und/oder Lichtquellen ist ebenfalls denkbar. Auch können optische Elemente wie Linsen, Reflektoren oder Lichtleiter benutzt werden, um den Strahlengang zu beeinflussen.

Ansonsten können die Portionskapseln und der Kapselhalter der Getränkemaschine bei vorteilhaften Ausführungsformen z.B. ähnlich konstruiert sein wie aus der DE 10 2004 056 224 A1 bekannt. So kann der Kapselboden eine Sollschwachstelle aufweisen, insbesondere bei Portionskapseln für niedrigen Zubereitungsdruck, die z.B. mit Filterkaffee gefüllt sind, um das Öffnen der Portionskapsel zu Beginn des Zubereitungsvorgangs zu erleichtern. Dem Kapselhalter können zwei relativ zueinander bewegbare Aufstechmittel zugeordnet sein, die dazu eingerichtet sind, beim oder nach dem Einsetzen einer Portionskapsel in den Kapselhalter den Kapseldeckel sowie den Kapselboden zu durchstoßen, so dass Wasser durch den Kapseldeckel in den Kapselkörper und Getränk durch den Kapselboden aus dem Kapselkörper gelangen kann. Der Kapselhalter kann eine Portionskapselhalteeinrichtung aufweisen, die von der übrigen Getränkemaschine abnehmbar ist, wobei die Getränkemaschine eine bewegbare Halteeinrichtung aufweisen kann, die zur Aufnahme der Portionskapselhalteeinrichtung eingerichtet ist und mit der die Portionskapselhalteeinrichtung auf eine stationäre Anlagefläche zu bzw. von der Anlagefläche weg bewegbar ist. Eine Portionskapsel mindestens eines Typs kann oberhalb der Getränkesubstanz eine Verteilereinrichtung und/oder unterhalb der Getränkesubstanz eine Siebeinrichtung enthalten, um eine gleichmäßige Verteilung des Zubereitungswassers bzw. eine Filterwirkung für das zubereitete Getränk zu gewährleisten. Die Siebeinrichtung kann auch als Sammeleinrichtung dienen, die das zubereitete Getränk ungehindert aus der Portionskapsel abfließen lässt.

Als Getränkesubstanz, mit der eine Portionskapsel gefüllt ist, eignen sich z.B. partikelförmige und mittels Wasser extrahierbare Getränkesubstanzen wie Mahlkaffee, insbesondere Mahlkaffee für Filterkaffee, Mahlkaffee für Caffé Crema, Mahlkaffee für Espresso oder entkoffeinierter Mahlkaffee, aber auch Instantkaffee, Tee, Milchpulver, Kakaopulver, Instantsuppen, Zucker, Süßstoff, flüssige Milch, flüssiges Milchkonzentrat, Fruchtkonzentrat, usw.

Im Folgenden wird die Erfindung anhand von Ausführungsbeispielen weiter erläutert. Die Zeichnungen zeigen in
- Figur 1 eine: schematische Darstellung einer Anordnung einer Portionskapsel mit einer Lichtquelle und einem Farbsensor, wobei die Lichtquelle und der Farbsensor den Kapseldeckel erfassen, und zwar in Teil (a) in seitlicher Ansicht und in Teil (b) in dreidimensionaler Ansicht, und
- Figur 2 eine: schematische Darstellung einer Anordnung einer Portionskapsel mit einer Lichtquelle und einem Farbsensor, wobei die Lichtquelle und der Farbsensor die seitliche Kapselwandung erfassen, und zwar in Teil (a) in seitlicher Ansicht und in Teil (b) in dreidimensionaler Ansicht.

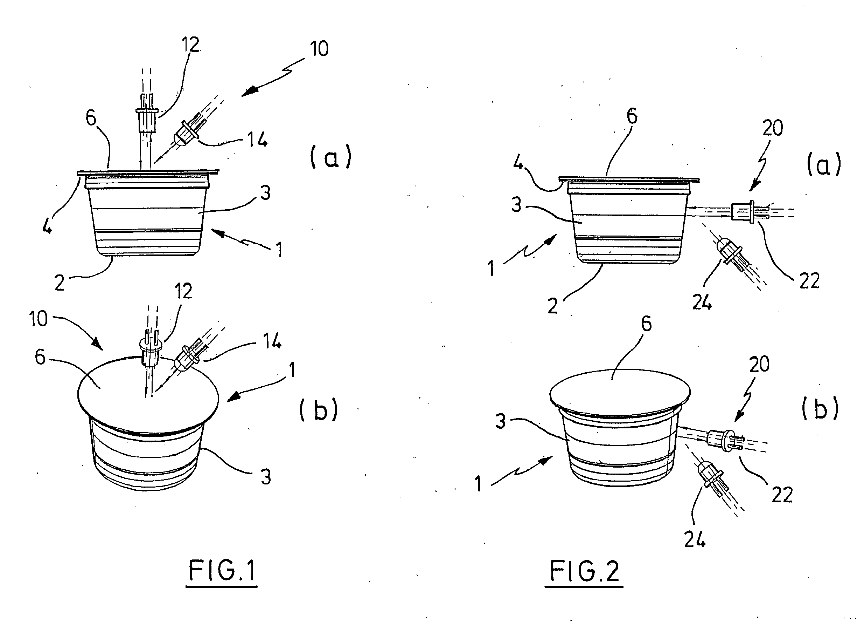

Die Figuren 1 und 2 veranschaulichen eine Portionskapsel 1, die eine Getränkesubstanz enthält. In den Ausführungsbeispielen ist die Portionskapsel 1 im Lieferzustand allseitig geschlossen und weist einen Kapselkörper mit einem Kapselboden 2 und einer seitlichen Wandung 3 auf. Am oberen Ende der seitlichen Wandung 3 springt nach außen ein umlaufender Flansch 4 vor. In den Ausführungsbeispielen sind der Kapselboden 2, die seitliche Wandung 3 und der Flansch 4 einstückig als Spritzteil oder als Tiefziehteil aus einem lebensmitteltauglichen Kunststoff gefertigt, der einschichtig oder mehrschichtig ausgeführt sein kann. Auf den Flansch 4 ist von oben ein Kapseldeckel 6 aus einer Aluminiumfolie aufgesiegelt.

Der Kapselboden 2 kann mit einer Sollschwachstelle versehen sein. In ihrem Innenraum kann die Portionskapsel oberhalb der Getränkesubstanz eine Verteilereinrichtung und/oder unterhalb der Getränkesubstanz eine Siebeinrichtung oder Sammeleinrichtung aufweisen. Beispiele hierfür finden sich in der DE 10 2004 056 224 A1.

Im Ausführungsbeispiel werden die Portionskapseln 1 in acht unterschiedlichen Typen bereitgestellt, nämlich
- Portionskapsel, gefüllt mit Mahlkaffee für Filterkaffee als Getränkesubstanz, für niedrigen Brühdruck mit Sollschwachstelle am Kapselboden und relativ großen Öffnungen in einer Sieb- oder Filtereinrichtung unterhalb der Getränkesubstanz und oberhalb des Kapselbodens,
- Portionskapsel, gefüllt mit Mahlkaffee für Caffe Crema als Getränkesubstanz, für mittleren Brühdruck mit Sollschwachstelle am Kapselboden und einer Sieb- oder Filtereinrichtung mit relativ kleinen Öffnungen unterhalb der Getränkesubstanz und oberhalb des Kapselbodens,
- Portionskapsel, gefüllt mit Mahlkaffee für Espresso als Getränkesubstanz, für hohen Brühdruck mit ungeschwächtem Boden und einer Filtereinrichtung unterhalb der Getränkesubstanz und oberhalb des Kapselbodens,
- Portionskapsel, gefüllt mit flüssigem Milchkonzentrat als Getränkesubstanz,
- Portionskapsel, gefüllt mit flüssigem Kakaokonzentrat als Getränkesubstanz,
- Portionskapsel, gefüllt mit löslichem Milchpulver als Getränkesubstanz,
- Portionskapsel, gefüllt mit Teeblättern als Getränkesubstanz, und
- Portionskapsel, gefüllt mit löslichem oder weitgehend löslichem Fruchtkonzentrat als Getränkesubstanz, zum Zubereiten von Fruchtsaft mit kaltem Wasser bei niedrigem Zubereitungsdruck.

In ihrer äußeren Form sind die Portionskapseln 1 unterschiedlichen Typs im Ausführungsbeispiel gleich, sie unterscheiden sich aber durch das Vorhandensein oder Nicht-Vorhandensein einer Sollschwachstelle am Kapselboden 2 und durch innen liegende Komponenten, die in den Figuren nicht dargestellt sind.

Ferner sind die Portionskapseln 1 unterschiedlichen Typs mit voneinander verschiedenen Farbcodierungen versehen. Im Ausführungsbeispiel gemäß Figur 1 haben die Kapseldeckel 6 voneinander deutlich verschiedene Grundfarben (und sind über der Grundfarbe beschriftet, um den Typ der Portionskapsel zu kennzeichnen). Im Ausführungsbeispiel gemäß Figur 2 sind die Kapselkörper (mit Kapselboden 2, seitlicher Wandung 3 und Flansch 4) einheitlich in deutlich verschiedenen Farben eingefärbt.

Die Farbcodierung der Portionskapseln 1 kann von einer Farberkennungseinrichtung einer Getränkemaschine erfasst werden, um die Getränkemaschine gemäß einem dieser Farbcodierung zugeordneten Programm zu betreiben.

Im Ausführungsbeispiel gemäß Figur 1 weist eine oberhalb des Kapseldeckels 6 angeordnete Farberkennungseinrichtung 10 einen Farbsensor 12 und eine Lichtquelle 14 auf. Die Lichtquelle 14 beleuchtet den Kapseldeckel 6 von oben, und der Farbsensor 12 erfasst das reflektierte Licht und erkennt unter Verwendung von zugeordneter Elektronik, die in den Figuren nicht dargestellt ist, die Farbcodierung oder den Farbbereich und gibt als Ausgangssignal, gegebenenfalls über die zugeordnete Elektronik, ein Signal ab, vorzugsweise ein digitales Signal, mit dem in eindeutiger Weise ein Programm zum Betrieb der Getränkemaschine ausgewählt wird.

Gemäß Figur 2 ist eine Farberkennungseinrichtung 20 neben der seitlichen Wandung 3 der Portionskapsel angeordnet, so dass ein Farbsensor 22 das von der Wandung 3 reflektierte Licht einer Lichtquelle 24 erfassen kann.

Farbsensoren arbeiten in der Regel nach dem Prinzip des menschlichen Auges. Alle Farben werden dabei durch eine Mischung der Grundfarben rot, grün und blau beschrieben. Die Lichtquelle beleuchtet eine farbige Oberfläche vorzugsweise mit Weißlicht. Das reflektierte Licht von der zu erkennenden farbigen Oberfläche wird im Farbsensor in seine Grundfarben zerlegt, wobei zusätzlich ein Intensitätssignal entsteht. Durch Normierung dieser Werte ergibt sich eine abstandsunabhängige Farberkennung. Mit dieser Verarbeitungsart lassen sich nahezu alle sichtbaren Farboberflächen erkennen. Aus der reflektierten Strahlung werden die Farbwertanteile ermittelt und mit in der zugeordneten Elektronik gespeicherten Werten verglichen. Stimmen die Werte überein oder liegen sie in einem gemeinsamen Bereich, wird ein entsprechendes Ausgangssignal aktiviert.

Als Farbe bezeichnet man das optische Spektrum der Lichtquelle, nachdem es von der Oberfläche eines Körpers (also der Farbcodierung) in den Farbsensor reflektiert ist, verknüpft mit der Auswertung. Die Oberfläche des Körpers absorbiert und reflektiert unterschiedliche Anteile des Spektrums, was von dem Farbsensor erfasst wird. Das elektrische Ausgangssignal für die einzelnen Grundfarben entspricht der jeweiligen Intensität des empfangenen Lichts, und die Elektronik ermittelt daraus einen Farbwert. Die Farberkennung ist abhängig von der Farbe und Form der Lichtquelle, den Reflexions- und Absorptionseigenschaften des Körpers und auch von der Empfindlichkeit der zur Auswertung in der zugeordneten Elektronik verwendeten Software.

Ein Farbeindruck ist letztlich subjektiv. Im vorliegenden Fall kommt es jedoch nicht auf das subjektive Farbempfinden an, sondern auf eine eindeutige Unterscheidung der für die Portionskapseln 1 verwendeten Farbcodierungen. Es sind daher auch Varianten von Farbsensoren denkbar, die nicht auf den drei Grundfarben rot, grün und blau basieren, sondern z.B. das reflektierte Licht nur in zwei Wellenlängenbereichen auswerten. Auch für die Art der Auswertung gibt es verschiedene Möglichkeiten. Bei der Betrachtung von nur zwei Wellenlängenbereichen lassen sich z.B. die Messwerte für die beiden Intensitäten direkt durcheinander dividieren, um ein sinnvolles Ausgangssignal zu erhalten, was eine besonders einfache Normierung darstellt. In solchen Fällen müssen aber die in Frage kommenden Farbcodierungen so ausgewählt sein, dass keine mehrdeutigen Ergebnisse vorkommen.

Handelsübliche Farbsensoren besitzen in der Regel drei lichtempfindliche Zellen für die Grundfarben rot, grün und blau. Deren elektrisches Signal entspricht der jeweiligen Intensität des empfangenen Lichts; die zugeordnete Elektronik ermittelt darauf den Farbwert. Dabei entscheiden die Anzahl der lichtempfindlichen Zellen und die Qualität der Signalamplitude darüber, wie differenziert die Farbe beurteilt werden kann. Hierbei ist eine vorherige Kalibrierung auf weiß und auf schwarz unter Verwendung der später vorgesehenen Lichtquelle empfehlenswert.

Bei den Farberkennungseinrichtungen 10 und 20 ist die Lichtquelle 14 bzw. 24 getrennt von dem Farbsensor 12 bzw. 22 ausgeführt. Eine in einem Farbsensor integrierte Lichtquelle, auch als zusätzliche Lichtquelle, ist ebenfalls denkbar.

Eine Getränkemaschine, in der sich die Portionskapsel 1 verwenden lässt, kann ähnlich aufgebaut sein wie die in der DE 10 2004 056 224 A1 offenbarte Kaffeemaschine (Brühmaschine). Der Inhalt dieser Schrift sowie der der Anmeldungen bzw. Schriften, für die die Priorität gemäß DE 10 2004 056 224 A1 beansprucht wurde, wird in den Offenbarungsgehalt der vorliegenden Anmeldung einbezogen. Wenn die Getränkemaschine einen zentralen Dorn zum Anstechen des Kapseldeckels 6 aufweist, ist im Ausführungsbeispiel gemäß Figur 1 der Farbsensor 12 nicht entlang der Längsachse der Portionskapsel 1 angeordnet, sondern dazu seitlich versetzt. Die Ausrichtung der Lichtquelle 14 ist dabei auf die Stelle abgestimmt, die von dem Farbsensor 12 erfasst wird.

Wenn die Portionskapsel 1 in den Kapselhalter der Getränkemaschine eingesetzt wird (also im Ausführungsbeispiel in die Brühkammer) oder auch zu einem späteren Zeitpunkt (z.B. zu Beginn des Brühvorgangs), erfasst die Farberkennungseinrichtung 10 bzw. 20 die Farbcodierung der Portionskapsel 1 und wählt in der Steuerung der Getränkemaschine ein dieser Farbcodierung zugeordnetes Programm zum Betrieb der Getränkemaschine aus. Abgestimmt auf die Getränkesubstanz in der Portionskapsel 1 können beim Ablauf des Programms verschiedene Größen variiert werden, z.B. der Wasserdruck, die Wassertemperatur, die Wassermenge und/oder die Wasserdurchflussgeschwindigkeit, wie bereits erläutert. Dabei kann ein Zubereitungsvorgang auch mittels mehrerer Portionskapseln in mehreren Abschnitten erfolgen. Dies wurde weiter oben am Beispiel eines Cappuccino-Getränks beschrieben.

Das System mit Portionskapseln, die Farbcodierungen aufweisen, und mit einer Getränkemaschine, die eine Farberkennungseinrichtung zum Erfassen einer jeweiligen Farbcodierung enthält, ermöglicht also eine einfache und zuverlässige Steuerung des Getränkezubereitungsvorgangs in einer auf das zuzubereitende Getränk weitgehend optimal abgestimmten Weise.

Bei den beschriebenen Ausführungsbeispielen erfasst die Farberkennungseinrichtung die Farbcodierung einer jeweiligen Portionskapsel 1, wenn die Portionskapsel in den Kapselhalter der Getränkemaschine eingesetzt ist. Die Grundidee der Steuerung des Zubereitungsvorgangs über ein mittels Farbcodierung ausgewähltes Programm ist aber auch auf weitere Anwendungsfälle übertragbar. Zum Beispiel lässt sich bei einer Getränkemaschine, die ein Vorratsmagazin für eine größere Zahl von Portionskapseln verschiedener Typen aufweist, die Zuführung einer Portionskapsel eines bestimmten Typs aus dem Vorratsmagazin in den Kapselhalter mit Hilfe der Farberkennung automatisieren. Hierbei kann die Farberkennungseinrichtung z.B. im Kapselmagazin selbst oder in einem Zuführungskanal zwischen dem Kapselmagazin und dem Kapselhalter angeordnet sein.

## Patentansprüche

1. System
- mit einer Getränkemaschine, die zum Zubereiten von Getränken, insbesondere zum Brühen heißer Kaffeegetränke, mittels Portionskapseln (1) eingerichtet ist und eine Druckwassereinrichtung, einen zur Aufnahme einer Portionskapsel (1) eingerichteten Kapselhalter und eine Steuerung aufweist, und
- mit Portionskapseln (1) von mindestens zwei unterschiedlichen Typen, die jeweils eine Getränkesubstanz enthalten,
**dadurch gekennzeichnet,**
- **dass** Portionskapseln (1) unterschiedlichen Typs mit voneinander verschiedenen Farbcodierungen versehen sind und
- **dass** die Getränkemaschine eine Farberkennungseinrichtung (10; 20) aufweist, die dazu eingerichtet ist, die Farbcodierung einer in den Kapselhalter einzusetzenden oder eingesetzten Portionskapsel (1) zu erfassen und in der Steuerung ein dieser Farbcodierung zugeordnetes Programm zum Betrieb der Getränkemaschine auszuwählen.

2. System nach Anspruch 1, **dadurch gekennzeichnet, dass** die Farberkennungseinrichtung (10; 20) einen Farbsensor (12; 22) aufweist.

3. System nach Anspruch 2, **dadurch gekennzeichnet, dass** die Farberkennungseinrichtung (10; 20) eine von dem Farbsensor (12; 22) separate Lichtquelle (14; 24) aufweist.

4. System nach Anspruch 2 oder 3, **dadurch gekennzeichnet, dass** die Farberkennungseinrichtung eine in den Farbsensor integrierte Lichtquelle aufweist.

5. System nach einem der Ansprüche 1 bis 4, **dadurch gekennzeichnet, dass** die Steuerung dazu eingerichtet ist, gemäß dem mittels der Farbcodierung ausgewählten Programm während eines Getränkezubereitungsvorgangs mindestens eine der in der folgenden Liste enthaltenen Größen zu steuern: Wasserdruck, Wassertemperatur, Wassermenge, Wasserdurchflussgeschwindigkeit.

6. System nach einem der Ansprüche 1 bis 5, **dadurch gekennzeichnet, dass** die Steuerung dazu eingerichtet ist, gemäß dem mittels der Farbcodierung einer ersten Portionskapsel (1) ausgewählten Programm einen ersten Abschnitt eines Getränkezubereitungsvorgangs durchzuführen und in Übereinstimmung mit der Farbcodierung einer danach in dem Kapselhalter aufgenommenen zweiten Portionskapsel (1) einen zweiten Abschnitt des Getränkezubereitungsvorgangs durchzuführen.

7. System nach einem der Ansprüche 1 bis 6, **dadurch gekennzeichnet, dass** Portionskapseln (1) unterschiedlichen Typs jeweils im Lieferzustand allseitig geschlossen sind und einen Kapselkörper mit einem Kapselboden (2) und einer seitlichen Wandung (3) sowie einen an dem Kapselkörper befestigten Kapseldeckel (6) aufweisen.

8. System nach Anspruch 7, **dadurch gekennzeichnet, dass** bei den Portionskapseln (1) unterschiedlichen Typs jeweils der Kapselkörper an seinem oberen Ende einen umlaufenden, nach außen vorspringenden Flansch (4) aufweist, an dem der Kapseldeckel (6) befestigt ist.

9. System nach Anspruch 7 oder 8, **dadurch gekennzeichnet, dass** die Farbcodierungen von Portionskapseln (1) unterschiedlichen Typs unterschiedliche Färbungen an den jeweiligen Kapselkörpern (2, 3, 4) aufweisen.

10. System nach einem der Ansprüche 7 bis 9, **dadurch gekennzeichnet, dass** die Farbcodierungen von Portionskapseln (1) unterschiedlichen Typs unterschiedliche Färbungen und/oder Farbcodes an den jeweiligen Kapseldeckeln (6) aufweisen.

11. System nach einem der Ansprüche 7 bis 10, **dadurch gekennzeichnet, dass** der Kapselboden (2) eine Sollschwachstelle aufweist.

12. System nach einem der Ansprüche 7 bis 11, **dadurch gekennzeichnet, dass** dem Kapselhalter zwei relativ zueinander bewegbare Aufstechmittel zugeordnet sind, die dazu eingerichtet sind, beim oder nach dem Einsetzen einer Portionskapsel (1) in den Kapselhalter den Kapseldeckel (6) sowie den Kapselboden (2) zu durchstoßen, so dass Wasser durch den Kapseldeckel (6) in den Kapselkörper und Getränk durch den Kapselboden (2) aus dem Kapselkörper gelangen kann.

13. System nach einem der Ansprüche 1 bis 12, **dadurch gekennzeichnet, dass** der Kapselhalter eine Portionskapselhalteeinrichtung aufweist, die von der übrigen Getränkemaschine abnehmbar ist, und dass die Getränkemaschine vorzugsweise eine bewegbare Halteeinrichtung aufweist, die zur Aufnahme der Portionskapselhalteeinrichtung eingerichtet ist und mit der die Portionskapselhalteeinrichtung auf eine stationäre Anlagefläche zu bzw. von der Anlagefläche weg bewegbar ist.

14. System nach einem der Ansprüche 1 bis 13, **dadurch gekennzeichnet, dass** eine Portionskapsel (1) mindestens eines Typs oberhalb der Getränkesubstanz eine Verteilereinrichtung und/oder unterhalb der Getränkesubstanz eine Siebeinrichtung enthält.

15. System nach einem der Ansprüche 1 bis 14, **dadurch gekennzeichnet, dass** die Getränkesubstanz einer Portionskapsel (1) mindestens eines Typs mindestens eine der aus der folgenden Liste ausgewählten Substanzen aufweist: partikelförmige und mittels Wasser extrahierbare Getränkesubstanzen, Mahlkaffee, Mahlkaffee für Filterkaffee, Mahlkaffee für Caffè Crema, Mahlkaffee für Espresso, entkoffeinierten Mahlkaffee, Instantkaffee, Tee, Milchpulver, Kakaopulver, Instantsuppen, Zucker, Süßstoff, flüssige Milch, flüssiges Milchkonzentrat, Fruchtkonzentrat.

16. Getränkemaschine, die zum Zubereiten von Getränken, insbesondere zum Brühen heißer Kaffeegetränke, mittels Portionskapseln (1) eingerichtet ist und eine Druckwassereinrichtung, einen zur Aufnahme einer Portionskapsel (1) eingerichteten Kapselhalter und eine Steuerung aufweist, **gekennzeichnet durch** eine Farberkennungseinrichtung (10; 20), die dazu eingerichtet ist, die Farbcodierung einer mit einer Farbcodierung versehenen, in den Kapselhalter einzusetzenden oder eingesetzten Portionskapsel (1) zu erfassen und in der Steuerung ein dieser Farbcodierung zugeordnetes Programm zum Betrieb der Getränkemaschine auszuwählen.

17. Getränkemaschine nach Anspruch 16, **gekennzeichnet durch** mindestens eines der in den Ansprüchen 2 bis 6, 12 und 13 explizit angegebenen Merkmale.

18. Verfahren zum Zubereiten eines Getränks, mit den Schritten:
- Einsetzen einer mit einer Farbcodierung versehenen Portionskapsel (1), die eine Getränkesubstanz enthält, in einen Kapselhalter einer Getränkemaschine, die eine Druckwassereinrichtung und eine Steuerung aufweist,
- Erfassen der Farbcodierung mit einer Farberkennungseinrichtung (10; 20) der Getränkemaschine,
- Auswählen eines dieser Farbcodierung zugeordneten Programms zum Betrieb der Getränkemaschine,
- Betreiben der Getränkemaschine mittels der Steuerung gemäß dem ausgewählten Programm.

19. Verfahren nach Anspruch 18, **dadurch gekennzeichnet, dass** die Steuerung gemäß dem mittels der Farbcodierung ausgewählten Programm während eines Getränkezubereitungsvorgangs mindestens eine der in der folgenden Liste enthaltenen Größen steuert: Wasserdruck, Wassertemperatur, Wassermenge, Wasserdurchflussgeschwindigkeit.

20. Verfahren nach Anspruch 18 oder 19, **dadurch gekennzeichnet, dass** zunächst gemäß dem mittels der Farbcodierung einer ersten Portionskapsel (1) ausgewählten Programm ein erster Abschnitt eines Getränkezubereitungsvorgangs durchgeführt wird und danach in Übereinstimmung mit der Farbcodierung einer danach in dem Kapselhalter aufgenommenen zweiten Portionskapsel (1) ein zweiter Abschnitt des Getränkezubereitungsvorgangs durchgeführt wird.
